(19) Europäisches Patentamt
European Patent Office
Office européen des brevets

(11) EP 0 769 071 B1

(12) EUROPÄISCHE PATENTSCHRIFT

(45) Veröffentlichungstag und Bekanntmachung des Hinweises auf die Patenterteilung:
**14.10.1998 Patentblatt 1998/42**

(21) Anmeldenummer: **95924937.6**

(22) Anmeldetag: **26.06.1995**

(51) Int Cl.[6]: **C14C 9/00**

(86) Internationale Anmeldenummer:
**PCT/EP95/02481**

(87) Internationale Veröffentlichungsnummer:
**WO 96/01331 (18.01.1996 Gazette 1996/04)**

(54) **VERWENDUNG CARBOXYLGRUPPEN-TERMINIERTER DI-, OLIGO- UND/ODER POLYESTER ZUR FETTENDEN AUSRÜSTUNG VON LEDER**

USE OF DI-, OLIGO- AND/OR POLYESTERS WITH TERMINAL CABOXYL GROUPS FOR THE OILING-OFF OF LEATHERS

UTILISATION DE DIESTERS, D'OLIGO-ESTERS ET/OU DE POLYESTERS A EXTREMITES PORTEUSES DE GROUPES CARBOXYLES POUR LA MISE EN HUILE DES CUIRS

(84) Benannte Vertragsstaaten:
**CH DE ES IT LI**

(30) Priorität: **04.07.1994 DE 4423352**

(43) Veröffentlichungstag der Anmeldung:
**23.04.1997 Patentblatt 1997/17**

(73) Patentinhaber: **Henkel Kommanditgesellschaft auf Aktien**
**40191 Düsseldorf (DE)**

(72) Erfinder:
- **EICKEN, Ulrich**
  **D-41353 Korschenbroich (DE)**
- **SCHENKER, Gilbert**
  **D-40699 Erkrath (DE)**
- **ZAUNS-HUBER, Rudolf**
  **D-40589 Düsseldorf (DE)**

(56) Entgegenhaltungen:
**EP-A- 0 265 818**
**WO-A-93/22464**
**DE-A- 3 909 614**
**US-A- 1 949 990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 769 071 B1

Printed by Jouve, 75001 PARIS (FR)

## Beschreibung

### Gebiet der Erfindung

Die Erfindung betrifft die Verwendung der untenstehend näher bezeichneten speziellen Carboxylgruppen-terminierten Di-, Oligo-und/oder Polyester, deren Alkoholkomponente Dimerdiol und deren Säurekomponente Sulfobernsteinsäure enthält, zur fettenden Ausrüstung von Leder. Dabei zeichnen sich diese Verbindungen insbesondere dadurch aus, daß sie den mit ihnen behandelten Ledern bzw. Pelzen gute Wasch- und Reinigungs-Echtheit, Fogging-Echtheit und gute Wasserfestigkeit verleihen. Darüber hinaus haben sie selbst-fixierende Eigenschaften.

### Stand der Technik

Die Fettung pflanzlich und/oder mineralisch gegerbter Leder beziehungsweise Pelzfelle ist ein essentieller Verfahrensschritt in der Ausrüstung zum gebrauchsfertigen Wertstoff. Die Form der Fettverteilung in der Hautsubstanz und das Ausmaß der Einbindung der Fettkomponenten in die Hautsubstanz beeinflussen die Eigenschaften und die Gebrauchsfähigkeit der Fertigprodukte entscheidend. Es besteht dabei umfangreiches Fachwissen zu möglichen Interaktionen zwischen den Fettkomponenten einerseits und der gegerbten, sowie Restgerbstoffe enthaltenden Hautsubstanz andererseits. Der spezielle Aufbau der Fettungsmittel - beispielsweise das Ausmaß ihrer lipophilen Gruppen und gegebenenfalls vorliegenden Reaktivgruppen zur Umsetzung mit geeigneten Reaktivbestandteilen im gegerbten Leder - bestimmen unter anderem die Dauerhaftigkeit und Wirkung der fettenden Ausrüstung im praktischen Gebrauch der Leder- und Pelzwaren.

Ein für die Praxis sehr wichtiges Bedürfnis besteht darin, fettende Substanzen bzw. Ausrüstungsmittel zur Verfügung zu stellen, die in der gegerbten Hautsubstanz so zuverlässig gebunden werden können, daß eine für die praktischen Bedürfnisse hinreichende Wasch- und Reinigungsbeständigkeit der Leder- und Pelzwaren sichergestellt ist. Hochwertige Lederwaren, beispielsweise aus der Bekleidungsindustrie, sollen dabei sowohl der wäßrig-tensidischen Wäsche als auch gegebenenfalls einer chemischen Reinigung ohne wesentliche Qualitätseinbuße zugänglich sein.

Für Leder, die im Innenbereich von Autos und Flugzeugen Verwendung finden, besteht darüber hinaus Bedarf, über Substanzen zur fettenden Ausrüstung zu verfügen, die Fogging-echt sind. Unter "Fogging" ist zu verstehen, daß im Laufe der Zeit flüchtige Substanzen aus dem Leder entweichen und sich in unerwünschter Weise niederschlagen, z.B. auf Windschutzscheiben. Unter Fogging-echten Substanzen ist zu verstehen, daß diese Substanzen zum einen selbst so fest im Innern des Leders gebunden sind, daß sie praktisch nicht flüchtig sind, zum anderen, daß diese Substanzen die Fogging-Charakteristik üblicher Fettungsmittel bzw. Fettungsmittelbestandteile verbessern, d.h. deren Fogging-Werte reduzieren.

Schließlich wird für Sonderfälle die weiterführende Bedingung hinreichender Wasserdichtigkeit des fertig ausgerüsteten Leders gewünscht. Zur wasserdichten Ausrüstung von Leder oder Pelzen sind insbesondere drei Verfahrensprinzipien bekannt: (1) Imprägnierung durch Einlagerung wasserunlöslicher Verbindungen, zum Beispiel feste Fette, Wachse oder spezielle Polymere; (2) Imprägnierung durch Einlagerung wasserquellender Verbindungen, die bei Wasseraufnahme hochviskose Emulsionen bilden und die Faserzwischenräume des Leders verstopfen, zum Beispiel spezielle Emulgatoren vom W/O-Typ und (3) Behandlung mit hydrophobierend wirkenden Verbindungen, zum Beispiel Aluminium-, Chrom- und/oder Zirkonkomplexe, Silkone oder organische Fluorverbindungen.

Die **DE 1 669 347** beschreibt die Verwendung von wasseremulgierbaren Sulfobernsteinsäure-Halbestern zum Fetten von Leder, wobei jedoch noch keine Wasserdichteffekte erzielt werden.

Gegenstand der EP 193 832 ist ein Verfahren zur Herstellung wasserdichter Leder oder Pelze unter Verwendung von Sulfobernsteinsäure-Monoestern in Kombination mit imprägnierenden und/oder hydrophobierenden Fettungsmitteln.

Die **DE 37 17 961** beschreibt ein Verfahren zur Herstellung von N,N-disubstituierten ß-Aminopropionsäuren und ihre Verwendung unter anderem zur Hydrophobierung von Leder und Pelzen. Die Herstellung dieser Verbindungen geschieht dabei in zwei Schritten derart, daß zunächst primäre Alkylamine an Acryl- bzw. Methacrylsäure angelagert werden und die dabei entstandenen N-Alkylaminopropionsäuren mit Carbonsäureanhydriden, Carbonsäurechloriden, Sulfonsäurechlorid, Isocyanaten, Halogencarbonsäuren oder Acryl- bzw. Methacylsäuren umgesetzt werden. Die Produkte können gewünschtenfalls anschließend noch - wenigstens teilweise - neutralisiert werden.

In der neueren Patentliteratur werden für die fettende Ausrüstung von insbesondere mineralisch gegerbten Ledern und Pelzen amphiphile Mittel beschrieben, die bestimmt ausgewählte Co-Oligomere von einerseits hydrophoben beziehungsweise oleophilen Monomeren und andererseits hydrophilen Monomerbestandteilen darstellen. Amphiphile Mittel dieser Art können in Form wäßriger Dispersionen, Emulsionen und/oder Lösungen nach Abschluß der Hauptgerbung in die auszurüstenden Leder oder Felle eingearbeitet - beispielsweise eingewalkt - werden. Insbesondere im Fall mineralisch gegerbter Leder oder Pelzfelle können diese amphiphilen Mittel gleichzeitig die Funktion der Nachgerbung übernehmen. Es kann schließlich eine abschließende Fixierung der amphiphilen Mittel mit insbesondere Mineralgerbstoffen vorgesehen sein. Die jüngere Patentliteratur beschreibt Hilfsstoffe der hier betroffenen Art:

So sind zum Beispiel in der **EP-A-372 746** entsprechende Mittel und ihre Anwendung beschrieben, wobei die amphiphilen Copolymere aus einem überwiegenden Anteil wenigstens eines hydrophoben Monomeren und einem untergeordneten Anteil wenigstens eines copolymerisierbaren hydrophilen Monomeren gebildet sind. Als hydrophobe Monomere sind aufgezählt: langkettige Alkyl(meth)acrylate, langkettige Alkoxy- oder Alkylphenoxy(polyethylen-oxid)-(meth)-acrylate, pimäre Alkene, Vinylester von lankettigen Alkylcarbonsäuren und deren Gemische. Die in geringerem Anteil vorliegenden hydrophilen Comonomeren sind ethylenisch ungesättigte wasserlösliche Säuren oder hydrophile basische Comonomere. Das Molekulargewicht (Gewichtsmittel) der Copolymeren liegt im Bereich von 2.000 bis 100.000.

Die **EP 412 389** beschreibt als Mittel zum Hydrophobieren von Leder und Pelzfellen den Einsatz von Copolymerisaten, die durch radikalische Copolymerisation von (a) $C_{8-40}$-Monoolefinen mit (b) ethylenisch ungesättigten $C_{4-8}$-Dicarbonsäureanhydriden nach Art einer Substanzpolymerisation bei Temperaturen von 80 bis 300°C zu Copolymerisaten mit Molmassen von 500 bis 20.000 g/Mol, anschließende Solvolyse der Anhydridgruppen der Copolymerisate und zumindest partielle Neutralisation der bei der Solvolyse entstehenden Carboxylgruppen in wäßrigem Medium mit Basen hergestellt worden sind und die in Form von wäßrigen Dispersionen oder Lösungen vorliegen.

In der **EP 418 661** wird zum gleichen Zweck die Verwendung von Copolymerisaten beschrieben, die (a) 50 bis 90 Gew.-% $C_{8-40}$-Alkyl(meth)acrylate, Vinylester von $C_{8-40}$-Carbonsäuren oder deren Mischungen und (b) 10 bis 50 Gew.-% monoethylenisch ungesättigte $C_{3-12}$-Carbonsäuren, monoethylenisch ungesättigte Dicarbonsäureanhydride, Halbester oder Halbamide von monoethylenisch ungesättigten $C_{4-12}$-Dicarbonsäuren, Amide von $C_{3-12}$-Monocarbonsäuren oder Mischungen davon einpolymerisiert enthalten und Molmassen von 500 bis 30.000 g/Mol besitzen.

Gegenstand der **EP-A-498 632** ist schließlich ein Verfahren zur Herstellung von Leder mit verbesserter Fogging-Charakteristik. Dies wird erreicht durch Behandlung des Leders mit wäßrigen Dispersionen, die frei sind von organischen Lösungsmitteln und die ein amphiphiles Copolymer enthalten, das aus wenigstens einem hydrophilen Monomer und wenigstens einem hydrophoben Monomer besteht.

Schließlich sei darauf hingewiesen, daß es in der Ledertechnik weithin üblich ist, im Anschluß an den Hydrophobierungsschritt eine nachträgliche Fixierung des hydrophobierenden Wirkstoffs durchzuführen. Darunter versteht man einen Verfahrensschritt, durch den sichergestellt werden soll, daß die in das Leder eingetragene hydrophobierende Komponente an die Lederfasern gebunden wird. Üblicherweise wird eine solche Fixierung mit Chrom- und/oder Aluminiumsalzen durchgeführt. Ein Beispiel für diese Technik bietet die DE-**A-35 07 241** bzw. die **DE-A-36 20 780.** In vielen Ländern verschärfen sich jedoch die Auflagen bezüglich des Chromgehalts im Abwasser. Bekanntlich wird aber bei Verwendung konventioneller Gerbstoffe ein nicht unerheblicher Teil von der Lederfaser nicht gebunden und gelangt deshalb über Wasch- und Spülvorgänge ins Abwasser. Beim Einsatz hochauszehrender Chromgerbstoffe ist dieser Anteil zwar geringer, für die Praxis in der Regel aber immer noch auf einem Niveau, das das Bedürfnis nach niedrigeren Werten entstehen läßt.

**WO 93/22464** beschreibt ein Verfahren zur Hydrophobierung von Leder unter Verwendung von Sulfobernsteinsäuremonoestern, die durch Umsetzung von Maleinsäureanhydrid mit ein- oder mehrwertigen Alkoholen und nachfolgender Sulfitierung zugänglich sind. In einer bevorzugten Ausführungsform handelt es sich bei diesen Estern um Organosilikondi(monosulfosuccinate), d.h. bei um Ester, deren Alkoholkomponente ein Silikondiol ist. Diese Verbindungen sollen hydrophobierte Leder ergeben, ohne daß eine Mineralsalzfixierung durchgeführt werden muß. Die Lehre der WO 93/22464 ist auch Gegenstand der Publikation von M.Kaußen, H.Lohmann und H.Kilian (vergleiche in: **Das Leder, 1992 (43) Seiten 223-227).** Daß in der Fachwelt Bedarf nach Lederhydrophobierungsmitteln besteht, die ohne Mineralsalzfixierung eingesetzt werden können, beschreibt auch H. Birkhofer (vergleiche in: **Das Leder, 1992 (43) Seiten 71-75).**

## Beschreibung der Erfindung

Aufgabe der vorliegenden Erfindung war es, Substanzen für die fettende Ausrüstung von Leder, Pelzen und dergleichen zur Verfügung zu stellen. Dabei sollten diese Substanzen insbesondere in der Lage sein, den mit ihnen behandelten Ledern bzw. Pelzen gute Waschechtheit, Reinigungs-Echtheit zu verleihen.

Unter dem Begriff der "fettenden Ausrüstung" ist dabei einerseits die Lederfettung im engeren Wortsinne zu verstehen, als auch die Hydrophobierung von Leder.

Unter Waschechtheit und Reinigungs-Echtheit ist - wie oben bereits angedeutet und dem Fachmann geläufig - zu verstehen, daß die mit den entsprechenden Substanzen behandelten Leder bzw. Pelze durch die entsprechenden Reinigungsoperationen, z.B. durch das Waschen mit tensidischen Flotten in Waschmaschinen oder die chemische Reinigung in z.B. Perchlorethylen-haltigen Bädern, hinsichtlich ihrer Gebrauchseigenschaften nicht oder nicht wesentlich beeinträchtigt werden, also z.B. nicht schrumpfen.

Eine weitere Aufgabe bestand darin, Substanzen und Verfahrensweisen bereitzustellen, die, aus wäßriger Flotte appliziert, hydrophobierte Leder ergeben, ohne daß dabei eine nachträgliche Behandlung mit Mineralsalzen durchgeführt werden muß, um die genannte Abwasserkontamination zu vermeiden. Mit anderen Worten bestand Bedarf nach "selbst-fixierenden" Lederhydrophobierungsmitteln.

Eine weitere Aufgabenstellung war es, daß diese Substanzen dem damit behandelten, das heißt gelickerten Leder gute Eigenschaften hinsichtlich Narbenfestigkeit, Fülle, Schmalzigkeit verleihen und daß anschließend gefärbte Leder sich durch einen nicht aufgehellten, egalen Farbton auszeichnen.

Eine weitere Aufgabenstellung war es, daß diese Substanzen gut von Leder aufgenommen werden und sich insbesondere durch eine hohe Lickerflottenauszehrung auszeichnen. Der letztgenannte Punkt ist neben der rein technischen Relevanz auch unter ökologischen Gesichtspunkten von Nutzen.

Eine weitere Aufgabenstellung war es, daß diese Substanzen sich durch eine gute Lagerstabilität auszeichnen.

Eine weitere Aufgabenstellung war es, daß sich die mit diesen Substanzen behandelten Leder durch eine gute Fogging-Charakteristik auszeichnen.

Die genannten Aufgaben wurden erfindungsgemäß gelöst durch spezielle Carboxylgruppen-terminierte Di-, Oligo- und/oder Polyester der unten näher bezeichneten Art, deren Alkoholkomponente Dimerdiol und deren Säurekomponente Sulfobernsteinsäure enthält.

Gegenstand der vorliegenden Erfindung ist zunächst die Verwendung Carboxylgruppen-terminierter Di-, Oligo- und/oder Polyester zur fettenden Ausrüstung von Leder, wobei

a) die <u>Alkoholkomponente</u>

- a1) zu 50 bis 100 Gew.% aus Dimerdiol und/oder Trimertriol,
- a2) zu 0 bis 50 Gew.% aus Alkandiolen mit 2 bis 18 C-Atomen und
- a3) zu 0 bis 50 Gew.% aus Polyalkylenglykolen, und

b) die <u>Säurekomponente</u>

- b1) zu 10 bis 100 Gew.% aus Sulfobernsteinsäure und
- b2) zu 0 bis 90 Gew.% aus Sulfogruppen-freien Dicarbonsäuren mit 2 bis 24 C-Atomen

besteht, wobei die im Ester vorhandenen Sulfonsäure- und Carboxylgruppen in freier Form oder in Form ihrer Alkalimetall-, Erdalkalimetall-, Ammonium-, Alkylammonium- oder Alkanolammoniumsalze vorliegen können.

In Bezug auf die Eigenschaften der erfindungsgemäß einzusetzenden Di-, Oligo- und/oder Polyester, der Einfachheit halber fortan abkürzend als **Ester** (I) bezeichnet, ist besonders hervorzuheben: Die Ester (I) sind zur raschen und durchdringenden imprägnierenden Ausrüstung von Leder und/oder Pelzen besonders geeignet, so daß Leder zugänglich werden, die sich durch ihre Waschechtheit und auch Reinigungsechtheit (z.B. in bezug auf eine chemische Reinigung) auszeichnen. Sie sind darin ähnlichen Verbindungen, die aus dem Stand der Technik bekannt sind, überlegen. Die Ester (I) zeichnen sich darüber hinaus durch gute Fogging-Echtheit sowie durchgute hydrophobierende Eigenschaften (Erhöhung der Wasserdichtigkeit) aus. Ein weiterer Vorteil der Ester (I) besteht darin, daß sie selbstfixierend sind, d.h. daß im Anschluß an den Eintrag des fettenden bzw. hydrophobierenden Wirkstoffs (I) in das Leder ein anschließender zusätzlicher Fixierungsschritt nicht zwingend erforderlich ist.

Als **<u>Alkoholkomponente</u>** der Ester (I) wird Dimerdiol und/oder Trimerdiol allein oder in Abmischung mit $C_{2-18}$-Alkandiolen oder Polyalkylenglykolen verwendet. Unter "Alkoholkomponente" ist dabei die Gesamtheit der Alkoholbausteine der jeweiligen Ester zu verstehen.

Unter **Dimerdiol** bzw. **Trimertriol** sind Alkohole zu verstehen, die sich von Dimerfettsäure bzw. Trimerfettsäure durch den Ersatz der COOH-Funktion durch eine OH-Funktion ableiten.

Unter Dimerfettsäuren sind dabei - wie in der Fachwelt üblich - solche Carbonsäuren zu verstehen, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus z.B. Tonerde. Die dabei erhaltenen Produkte stellen Gemische verschiedener Substanzen dar, wobei die Dimersisierungsprodukte überwiegen. Jedoch sind auch geringe Anteile höherer Oligomerer, insbesondere die Trimerfettsäuren, enthalten. Daneben enthalten die Dimerfettsäuren herstellungsbedingt auch Monomere oder monofunktionelle Fettsäuren. Dimerfettsäuren sind handelsübliche Produkte und werden in verschiedenen Zusammensetzungen und Qualitäten angeboten. Analog den Dimerfettsäuren sind auch die Trimerfettsäuren Oligomersierungsprodukte ungesättigter Fettsäuren, wobei jedoch der Anteil an Trimeren im Produkt überwiegt.

Die Herstellung von Dimerdiol ist an sich bekannt und nicht Gegenstand der Erfindung. Dimerdiol kann beispielsweise durch Hydrierung von Dimerfettsäuren und/oder deren Estern gemäß der deutschen Patentschrift **DE-B-17 68 313** hergestellt werden. Die Hydrierungen der dimerisierten Fettsäuren bzw. deren Estern können in Gegenwart von kupfer- und/oder zinkhaltigen Katalysatoren in üblichen kontinuierlich arbeitenden Druckhydrierapparaturen mit Gaskreislauf durchgeführt werden. Unter diesen Umständen werden nicht nur die Carboxylgruppen der Fettsäuren zu

Hydroxylgruppen hydriert, sondern auch gegebenenfalls noch in den dimerisierten Fettsäuren bzw. deren Estern enthaltene Doppelbindungen zum Teil oder vollständig hydriert. Es ist aber auch möglich, die Hydrierung so durchzuführen, daß die Doppelbindungen während der Hydrierung vollständig erhalten bleiben. In diesem Fall fallen ungesättigte Dimerdiole gegebenenfalls in Mischung mit Trimertriolen und monofunktionellen Alkoholen an. Vorzugsweise wird die Hydrierung jedoch so durchgeführt, daß die Doppelbindungen zumindest teilweise oder vollständig hydriert werden.

Unabhängig von den beschriebenen Verfahren zur Herstellung der Dimerdiole werden bevorzugt solche Dimerdiole verwendet, die aus Fettsäuren oder deren Estern bzw. Fettalkoholen mit 18 bis 22 C-Atomen hergestellt worden sind. Auf diese Weise entstehen Dimerdiole mit 36 bis 44 C-Atomen. Die Dimerdiole, die nach den oben genannten technischen Verfahren hergestellt worden sind, enthalten - gemäß ihrer Herkunft aus den entsprechenden Dimerfettsäuren - wechselnde Mengen an Trimertriolen und monofunktionellen Alkoholen. In der Regel liegt dabei der Anteil an Dimerdiolen über 70 Gew.-% und der Rest sind Trimertriole und Monomeralkohole. Im Sinne der Erfindung können sowohl Dimerdiole dieser Zusammensetzung eingesetzt werden als auch reinere Dimerdiole mit einem Dimerdiolanteil oberhalb von 80 Gew.-%. Besonders bevorzugt sind Dimerdiole mit über 95 Gew.-% Dimerdiolanteil, und dabei insbesondere solche, deren Doppelbindung zumindest teilweise oder vollständig hydriert sind.

Neben dem obligatorischen Dimerdiol und/oder Trimertriol kann die Alkoholkomponente der erfindungsgemäß einzusetzenden Ester (I) als difunktionelle Hydroxylverbindungen **Alkandiole** mit 2 bis 18 C-Atomen enthalten. Beispiele dafür sind: Ethylenglykol, 1,2-Propandiol, 1,3-Propandiol, 1,4-Butandiol, 1,6-Hexandiol, 1,8-Octandiol, 1,10-Decandiol, 1,12-Octadecandiol, Neopentylglykol, Diethylenglykol und Bishydroxymethylcyclohexan. Diese Alkandiole werden in anteilsweisen Mengen von bis zu 50 Gew.% - bezogen auf den Gesamtgehalt der Alkoholkomponente, die zur Herstellung der Ester (I) eingesetzt wird - verwendet.

Als **Polyalkylenglykole** können die an sich bekannten Polymerisate oder Mischpolymerisate des Ethylen-, Propylen und Butylenoxids eingesetzt werden. Bevorzugt werden Polymerisate des Ethylenoxids verwendet. Die Molekulargewichte der Polyalkylenglykole können im Bereich von 200 bis 10.000, vorzugsweise von 200 bis 1.000 liegen.

In einer bevorzugten Ausführungsform der vorliegenden Erfindung besteht die Alkoholkomponente der Ester (I) ausschließlich aus Dimerdiol und/oder Trimertriol. Ausdrücklich sei an dieser Stelle bezüglich der Terminologie betont, daß unter Dimerdiol und Trimertriol stets die technischen Produkte, über deren Herstellung und Zusammensetzung oben nähere Angaben gemacht wurden, verstanden werden.

Die **<u>Säurekomponente</u>** der erfindungsgemäß einzusetzenden Ester (I) enthält zwingend Sulfobernsteinsäure und fakultativ Sulfogruppenfreie Dicarbonsäuren mit 2 bis 24 C-Atomen. Unter "Säurekomponente" ist dabei die Gesamtheit der COOH-Gruppen-haltigen Bausteine der jeweiligen Ester zu verstehen. Im Zuge der Herstellung der Ester können diese difunktionellen Säurebausteine entweder in Form der jeweiligen freien Säuren oder in Form sich davon ableitender Syntheseäquivalente wie Anhydride oder Ester von niederen Alkoholen eingesetzt werden.

Als Beispiele für Säuren, die sich zur Herstellung der erfindungsgemäß einzusetzenden Ester (I) eignen, seien genannt: Maleinsäure und Fumarsäure als Vorstufen für Sulfobernsteinsäure, die obligatorisch in der Säurekomponente des Esters enthalten ist; weitere - fakultative - Dicarbonsäuren sind vorzugsweise solche, die sich - im Sinne der klassischen Definition etwa des "Römpp" (vergl. z.B. O.-A.Neumüller, Römpps Chemie-Lexikon, Stuttgart 1973, S.828f) - von linearen Paraffinen dadurch ableiten, daß deren beide Enden zu Carboxylgruppen oxidiert sind, etwa Oxalsäure, Malonsäure, Bernsteinsäure, Glutarsäure, Adipinsäure, Pimelinsäure, Korksäure, Azelainsäure, Sebacinsäure, 1,11-Undecadisäure, 1,12-Dodecandisäure, ferner Phthalsäure, Isophthalsäure, Terephthalsäure, Hexahydrophthalsäure, Tetrahydrophthalsäure.

Die Herstellung der Ester (I) kann ein- oder zweistufig geschehen. Eine wichtige Art der Herstellung besteht darin, daß man die Säure-bausteine (Maleinsäure und/oder Fumarsäure sowie gewünschtenfalls zusätzlich andere Dicarbonsäuren mit 2 bis 24 C-Atomen) mit den obengenannten Alkoholbausteinen verestert und anschließend Sulfogruppen in das Molekül einführt, beispielsweise durch Umsetzung des bei der Veresterung primär erhaltenen Esters mit Hydrogensulfit, die in der Weise zu geschehen hat, daß die Säurekomponente des resultierenden Esters (I) zu mindestens 10 Gew.-% aus Sulfobernsteinsäure besteht.

Bei der Herstellung der erfindungsgemäß einzusetzenden Ester (I) werden die Mengenverhältnisse der zur Veresterungsreaktion jeweils eingesetzten Säurebausteine (bzw. der entsprechenden Syntheseäquivalente, bei denen die COOH-Funktion in verkappter Form vorliegt) sowie der Alkoholbausteine derart eingestellt, daß das Äquivalent-Verhältnis COOH:OH im Bereich von 1,05 : 1 bis 2 : 1 liegt. Auf diese Weise soll sichergestellt werden, daß die Ester (I) Carboxylgruppen-terminiert sind. In diesem Zusammenhang sei darauf hingewiesen, daß es zum allgemeinen Fachwissen gehört, daß sich bei Polykondensationen das Molekulargewicht einerseits durch das molare Verhältnis der reaktiven Gruppen, andererseits durch den Umsatz steuern läßt.

Die Veresterung kann nach üblichen Methoden der präparativen organischen Chemie erfolgen. In einer ersten Variante wird die Mischung der jeweils eingesetzten Alkohole und Dicarbonsäuren auf Temperaturen von 100 bis 250° C erhitzt und das Reaktionswasser abgetrennt.

Da Dicarbonsäuren mit olefinischen Doppelbindungen bei den hohen Temperaturen der Veresterung zur Polymerisation neigen, ist es zweckmäßig, einen geeigneten Polymerisationsinhibitor zuzufügen. Dem Fachmann geläufige

Inhibitoren sind z.B. substituierte oder unsubstituierte Phenole wie Hydrochinon, 2,4-t-Butylphenol und Ionol oder Phenothiazin oder Triphenylphosphit. Die Polymerisationsinhibitoren können in Mengen von 0,001 bis 1 Gew.% - bezogen auf Gesamtansatz - zugefügt werden.

Zur Beschleunigung der Reaktion können übliche Katalysatoren wie starke Säuren, z.B. Schwefelsäure, Phosphorsäure oder Toluolsulfonsäure in Mengen von 0,1 bis 5 Gew.% - bezogen auf Gesamtansatz - zugefügt werden. Auch der Zusatz von üblichen, die Veresterungsreaktion beschleunigenden Zinnverbindungen, wie z.B. Zinndioctoat, Zinnoxalat, Zinnoxid oder auch elementarem Zinn in der Form von Zinnschliff in Mengen von 0,01 bis 0,2 Gew.% -bezogen auf den Gesamtansatz - ist möglich.

Zur Entfernung des Reaktionswassers kann ein organisches Lösungsmittel verwendet werden, das mit Wasser ein Azeotrop bildet. Für diesen Zweck wohlbekannte Lösungsmittel sind z.B. Toluol, Cyclohexan, n-Hexan oder Xylol.

Bei der sich an die Veresterung anschließenden Addition von Hydrogensulfit-Ionen an die Doppelbindungen der Dicarbonsäure-Einheiten im Ester verläuft die Reaktion mit cis-substituierten Doppelbindungen schneller. Es ist daher bevorzugt, den Anteil an cis-substituierten Doppelbindungen in den primär hergestellten Estern dadurch auf einem möglichst hohen Niveau zu halten, daß man die Veresterungstemperatur so einstellt, daß noch keine nennenswerte Isomerisierung zum thermodynamisch stabileren trans-substituierten Produkt stattfindet. Dies kann dadurch erreicht werden, daß die Veresterung bei relativ niedrigen Temperaturen durchgeführt wird. Dabei wird zur Entfernung des Reaktionswassers ein relativ niedrig siedendes Lösungsmitel wie z.B. Toluol, Cyclohexan oder Benzinfraktionen mit Siedepunkten von 80 bis 150 °C und/oder eine relativ große Menge von z.B. 1 bis 5 Gew.% - bezogen auf die Summe aus Diolen und Dicarbonsäuren - an saurem Veresterungskatalysator verwendet.

In einer zweiten Variante werden die primären Ester durch Umesterung von Dicarbonsäure-Estern wie z.B. Maleinsäuredimethyl- oder - diethylester mit den entsprechenden Diolen hergestellt. Anstelle des Reaktionswassers wird in diesem Falle der freiwerdende Alkohol, z.B. Methanol oder Ethanol, abgetrieben.

Die Einführung von Sulfogruppen in die primär erhaltenen Ester kann durch Sulfitierung, d.h. durch Addition von Hydrogensulfit an die olefinischen Doppelbindungen in diesen Estern erfolgen. Dies geschieht in an sich bekannter Weise durch Umsetzung mit Alkali- oder Erdalkali- oder Ammonium-Salzen der schwefligen oder pyroschwefligen Säure, wie z.B. Natriumhydrogensulfit oder Natriumbisulfit. Ein Mol Natriumbisulfit entspricht dabei 2 Mol Hydrogensulfit bei der Sulfitierung. Bevorzugt wird Natriumbisulfit verwendet.

Die Menge an Bisulfit wird üblicherweise so bemessen, daß 10 bis 200 Mol%, bevorzugt 50 bis 100 Mol% an Hydrogensulfitionen - bezogen auf die Doppelbindungen - für die Reaktion zur Verfügung gestellt werden.

Vorzugsweise wird der primär erhaltene Ester, an dessen Doppelbindungen Bisulfit addiert werden soll, in Form einer Lösung in einem mit Wasser zumindest teilweise mischbaren organischem Lösungsmittel vorgelegt. Das Lösungsmittel muß einerseits den sehr unpolaren primär erhaltenen Ester lösen, andererseits aber auch eine gewisse Verträglichkeit mit dem als Lösungsmittel für das Sulfitierungsmittel verwendeten Wasser aufweisen. Diese Anforderungen werden von wassermischbaren Lösungsmitteln erfüllt.

Wassermischbar im Sinne der Erfindung heißt, daß bei Raumtemperatur mindestens 10 Gew.% des Lösungsmittels in Wasser löslich sind. Beispiele für wassermischbare Lösungsmittel sind Ethanol, 1-Propanol, 2-Propanol, 2-Butanol, 1,2-Ethandiol, 1,2-Propandiol, Propylenglykolmonomethylether, Butylglykol, Diethylenglykol, Diethylenglykoldimethylether, N-Methylpyrrolidon und Sulfolan.

Das Sulfitierungsmittel, bevorzugt in Form einer wäßrigen Lösung, wird auf einmal oder kontinuierlich zugegeben. Die Reaktionsmischung wird bei Temperaturen von 80 bis 105 °C solange gerührt, bis alle Doppelbindungen Hydrogensulfit addiert haben oder ein konstanter Gehalt an Hydrogensulfit erreicht ist. Der Hydrogensulfitgehalt kann dabei durch dem Fachmann bekannte Methoden leicht bestimmt werden, z.B. durch Iodometrie.

Bei der Sulfitierung kann es zweckmäßig sein, dem primär erhaltenen Ester einen Emulgator zuzusetzen, der Sulfogruppen enthält, vorzugsweise einen Ester der Sulfobernsteinsäure in Form seines Salzes mit einem Alkali-Metall. Besonders geeignete Ester der Sulfobernsteinsäure sind der Dioctylester oder Tridecylester in Form ihrer Na-Salze. Es ist auch möglich, zu Beginn der Sulfitierung einen Ester (I), der aus einem vorherigen Ansatz stammt, zuzugeben. Die Menge des zugefügten Emulgators liegt zwischen 0,1 und 10 Gew.%, bevortugt·zwischen 1 und 5 Gew.% bezogen auf den zu sulfitierenden Polyester.

Die Herstellung der Ester (I) kann jedoch - sofern die Säurekomponente von (I) frei ist vom fakultativen Bestandteil b2) - auch durch Umesterung der Alkoholkomponente mit niedermolekularen Estern der Sulfobernsteinsäure oder ihrer Salze, z.B. mit dem Natrium-Salz des Dimethylsulfobernsteinsäureesters oder des Dioctylsulfobernsteinsäureesters, erfolgen. Der Aufbau der Ester (I) erfolgt in diesem Fall unter Abspaltung des niedermolekularen Alkohols. Geeignete Umesterungsbedingungen sind Temperaturen von 100 bis 250 °C bei Normaldruck oder vermindertem Druck in Gegenwart üblicher Umesterungskatalysatoren wie Alkalimetallhydroxiden oder -alkoxiden oder Titanverbindungen oder Zinnverbindungen. Gegen Ende der Reaktion kann es zweckmäßig sein, zur Erleichterung der Alkoholentfernung unter vermindertem Druck zu arbeiten. In Bezug auf das Äquivalent-Verhältnis von in den Estergruppen in verkappter Form vorliegenden COOH-Gruppen zu den Hydroxylgruppen gilt das oben gesagte.

Die Ester (I) werden vorzugsweise in saurer Form oder in Form ihrer Alkalimetall- oder Ammoniumsalze eingesetzt.

In einer besonders bevorzugten Ausführungsform der vorliegenden Erfindung werden solche Ester (I) eingesetzt, die durch die allgemeine Struktur (Ia) charakterisiert sind:

$$\text{(t-Sulf)-(Diol)-[(i-Sulf)-(Diol)]}_x\text{-(t-Sulf)} \qquad \text{(Ia)}$$

Darin bedeuten:

- t-Sulf eine $[M^1O_2C\text{-}CH_2\text{-}CH(SO_3M^2)\text{-}CO_2\text{-}]$-Gruppe,
- i-Sulf eine $[\text{-}O_2C\text{-}CH_2\text{-}CH(SO_3M^3)\text{-}CO_2\text{-}]$-Gruppe,
  wobei die Reste $M^1$ bis $M^3$ unabhängig voneinander Wasserstoff, Alkalimetall, Erdalkalimetall, Ammonium, Alkylammonium oder Alkanolammonium bedeuten,
- Diol eine Dimerdiolgruppe und
- x null oder eine Zahl im Bereich von 1 bis 10

Es handelt sich damit also um Ester (I), die als Alkoholkomponente ausschließlich Dimerdiol und als Säurekomponente ausschließlich Sulfobernsteinsäure enthalten. Ganz besonders bevorzugt sind dabei wiederum diejenigen Verbindungen (Ia), bei denen x die Zahl 0 bedeutet. Dabei handelt es sich um Diester von Dimerdiol und Sulfobernsteinsäure.

In einer weiteren Ausführungsform der Erfindung werden die Ester (I) in Kombination mit mindestens einem der nachstehend beschriebenen Aminopropionsäurederivate (II) und/oder Co-Oligomeren (III) eingesetzt.

Die **Aminopropionsäurederivate (II)** sind charakterisiert durch folgende Formel:

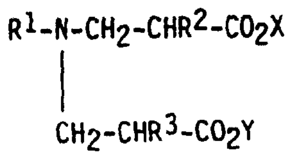

(II)

In der allgemeinen Formel (II) bedeuten

- der Rest $R^1$ eine gesättigte, geradkettige oder verzweigte Alkylgruppe mit 8 bis 22 C-Atomen,

- die Reste $R^2$ und $R^3$ unabhängig voneinander Wasserstoff oder eine Methylgruppe und

- die Reste X und Y unabhängig voneinander Wasserstoff, Alkalimetall, Erdalkalimetall, Ammonium, Alkylammonium oder Alkanolammonium.

Dabei sind diejenigen Verbindungen (II) bevorzugt, in denen der Rest $R^1$ einen geradkettigen Alkylrest mit überwiegend 12 bis 18 C-Atomen, insbesondere mit 12 bis 14 C-Atomen, bedeutet. Die Reste $R^2$ und $R^3$ bedeuten vorzugsweise Wasserstoff. In bezug auf die Reste X und Y gilt, daß diejenigen Verbindungen (II) bevorzugt sind, bei denen einer der Reste X und Y ein Alkalimetall und der andere Wasserstoff bedeutet.

Die **Co-Oligomeren (III)** sind dadurch charakterisiert, daß sie wasserdispergierbares und/oder wasseremulgierbar sind und aufgebaut sind aus

a) Fettcrotonaten und

b) radikalisch copolymerisierbaren hydrophilen ethylenisch ungesättigten Säuren und/oder deren Anhydriden, die auch

c) untergeordnete Mengen weiterer copolymerisierbarer Comonomere enthalten können.

Unter Fettcrotonaten sind dabei Ester der Crotonsäure (trans-2-Butensäure) mit $C_{10\text{-}40}$-Fettalkoholen zu verstehen. In Bezug auf die Co-Oligomeren (III) sei in diesem Zusammenhang ausdrücklich auf die **WO 94/01587** verwiesen, deren Inhalt hiermit ausdrücklich zum Bestandteil der vorliegenden Erfindungsoffenbarung gemacht wird.

Die Ester (I) werden üblicherweise in wäßrigem Milieu zur fettenden Ausrüstung von Leder, insbesondere chromgegerbtem Leder, eingesetzt. Dabei kann es sich - je nach der Art der Ester - um wäßrige Lösungen oder um wäßrige Dispersionen handeln. Ein weiterer Gegenstand der vorliegenden Erfindung sind daher Mittel zur fettenden Ausrüstung von Ledern, Pelzen und dergleichen in Form einer wäßrigen Lösung bzw. Dispersion, die sich durch einen Gehalt an den Estern (I) auszeichnen.

Diese wäßrigen Angebotsformen werden bevorzugt auf einen schwach sauren bis schwach alkalischen Bereich eingestellt. Zur Sicherstellung der Lagerstabilität kann es dabei zweckmäßig sein, Angebotsformen vorzusehen, deren wäßrige Phase durch Zugabe von anorganischen und/oder organischen Basen auf neutrale bis schwach alkalische pH-Werte eingestellt ist. Zur pH-Regulierung eignen sich an sich alle im einschlägigen Stand der Technik beschriebenen Basen. Besonders bevorzugt sind die Alkalisalze, insbesondere des Natriums und/oder Kaliums. Aber auch Ammoniumsalze oder Salze von Alkanolaminen wie Diethanolamin sind geeignete Vertreter. Bevorzugt werden die pH-Werte der wäßrigen Angebotsformen der Ester (I) - oder deren Kombinationen mit den Verbindungen (II) und/oder (III) - im Bereich um pH 7 bis 8 eingestellt.

Der Wertstoffgehalt der wäßrigen Angebotsformen an den Estern (I) - oder deren Kombinationen mit den Verbindungen (II) und/oder (III) - wird typischerweise im Bereich von etwa 20 bis 75 Gew.-% eingestellt. Sie lassen sich mit Wasser und/oder wäßrigen Wirkstoffabmischungen der nachfolgend geschilderten Art jederzeit aufmischen und zum praktischen Einsatz bringen.

Die Ester (I) - sowie auch deren Kombinationen mit den Verbindungen (II) und/oder (III) - zeichnen sich durch selbstemulgierende Eigenschaften aus, so daß für den praktischen Einsatz der wäßrigen Angebotsformen die Anwesenheit weiterer Emulgatoren an sich entbehrlich ist.

Es kann aber gewünscht sein, daß die wäßrigen Angebotsformen der Ester (I) - beziehungsweise deren Kombinationen mit den Verbindungen (II) und/oder (III) - weitere ausgewählte Emulgatoren enthalten, die beim Eintrag in insbesondere mineralgegerbte Leder und/oder Felle eine zusätzliche Fettung beziehungsweise Hydrophobierung bewirken und bevorzugt gleichzeitig über saure Gruppen im gegerbten Leder beziehungsweise Fell fixiert werden können. Ein wichtiges Beispiel für Verbindungen dieser Art sind die eingangs genannten in Wasser emulgierbaren Sulfobernsteinsäure-Halbester, die von langkettigen Fettalkoholen und/oder ihren Alkylenoxidaddukten abstammen. Ein wichtiges Beispiel für die Emulgatorenklasse der hier betroffenen Art sind $C_{18}$-Sulfobernsteinsäure-Halbester. Es hat sich gezeigt, daß durch die Mitverwendung solcher emulgatorartiger Hilfskomponenten-die an sich als Ausrüstungsmittel für die Lederfettung vorbekannt sind - im Sinne der erfindungsgemäßen Zielsetzung vorteilhafte Wirkungen erreicht werden können. Als Beispiele für Verbindungstypen dieser Art seien im einzelnen hier benannt:

Sulfobernsteinsäure-Halbester langkettiger Fettalkohole mit insbesondere 12 bis 24 C-Atomen und/oder deren Alkylenoxidaddukten mit bevorzugt bis zu 6 Alkylenoxidresten, entsprechende Sulfobernsteinsäure-Halbester von Fettsäuremono- und/oder -diglyceriden beziehungsweise deren Alkylenoxidaddukten mit bevorzugt bis zu 6 Alkylenoxidresten bei weiterhin bevorzugter Kettenlänge der Fettsäure(n) im Bereich $C_{12-24}$, langkettige Sulfofettsäuren, insbesondere entsprechende alpha-Sulfofettsäuren mit vorzugsweise 12 bis 24, insbesondere 16 bis 18 C-Atomen, wobei im Falle dieser alphasubstituierten Sulfofettsäuren die Kohlenwasserstoffreste üblicherweise gesättigt sind, sowie innenständige Sulfofettsäuren von olefinisch 1- und/oder mehrfach ungesättigten Carbonsäuren wie Ölsäure, Linolsäure, Linolensäure und dergleichen.

Die wäßrigen Angebotsformen der Ester (I) - sowie auch deren Kombinationen mit den Verbindungen (II) und/oder (III) - können auch weitere Fettungs- beziehungsweise Hydrophobierungsmittel im Sinne der Wertstoffgemische enthalten, wie sie in der eingangs zitierten EP 193 832 beschrieben sind. In dieser Ausführungsform der Erfindung werden die Ester (I) kombiniert mit imprägnierenden und/oder hydrophobierenden Fettungsmitteln, wie Sulfobernsteinsäuremonoester-Salze mit $C_{12-24}$-Fettresten, in Kombination mit weiteren imprägnierenden Fettungsmitteln, ausgewählt insbesondere aus der Gruppe der oxidierten oder oxidierten und teilsulfierten $C_{18-26}$-Kohlenwasserstoffe oder $C_{32-40}$-Wachse eingesetzt. Andere Beispiele für diese zusätzlichen imprägnierenden Fettungsmittel sind Phosphorsäuremono-$C_{12-24}$-Alkylester, Partialester von Polycarbonsäuren wie Citronensäure-Mono-$C_{16-24}$-Alkylester, Partialester von Polyalkoholen wie Sorbitan-, Glycerin- oder Pentaerythrit-$C_{16-24}$-fettsäureester.

Eine besonders geeignete Emulgatorklasse, die im Rahmen der erfindungsgemäßen Lehre mitverwendet werden kann, sind die aus der Ausrüstung von Ledern und Pelzen mit Fettstoffen bekannten N-Acylaminosäuren, insbesondere Fettsäuresarkoside, z.B. N-Oleoylsarkosin, wie sie beispielsweise als Emulgatoren zum Eintrag von Silikonölen in Leder und Pelze in der EP-B-213 480 im einzelnen beschrieben sind. Geeignete Emulgatoren sind demgemäß insbesondere Salze von N-($C_{9-20}$-Acyl)-aminosäuren, wobei entsprechenden Salzen einer Aminosäure mit 2 bis 6 C-Atomen, die mit dem Acylrest einer gesättigten oder ungesättigten Fettsäure mit 9 bis 20 C-Atomen am Aminstickstoff, der gegebenenfalls zusätzlich durch Methyl substituiert ist, besondere Bedeutung zukommt. Geeignete Salze dieser Emulgatoren sind wiederum insbesondere Alkali-, Ammonium- oder Alkanolaminsalze.

Von den N-($C_{9-20}$-Acyl)-aminosäuren sind solche mit 2 bis 4 C-Atomen und mit der Aminogruppe in alpha-Stellung zur Carboxylgruppe besonders bevorzugt, die weiterhin am Aminstickstoffatom zusätzlich durch eine Methylgruppe substituiert sind. Davon weisen eine besonders überlegene Wirkung die Fettsäuresarkoside von gesättigten oder ungesättigten Fettsäuren mit 9 bis 20, bevorzugt 16 bis 18 C-Atomen auf. Das bevorzugte Sarkosid ist das Ülsäuresarkosid. Weiterhin sind insbesondere das N-Stearoyl-sarkosin, N-Lauroyl-sarkosin und N-Isononanoyl-sarkosin besonders geeignet und zwar jeweils in Form ihrer Alkalisalze, Ammoniumsalze oder der Salze von Mono-, Di- oder Trialkanolaminen mit insbesondere 2 bis 4 C-Atomen im Alkanolrest.

Beim Einsatz von solchen Wertstoffgemischen beträgt die Menge der Ester (I) - beziehungsweise die Gesamtmenge der Verbindungen (I) bis (III) - bevorzugt wenigstens etwa 35 Gew.-% des Wertstoffgemisches und insbesondere wenigstens etwa 50 Gew.-%. Es kann jedoch zweckmäßig sein, wenigstens etwa 70 bis 80 Gew.-% des ingesamt in die auszurüstenden Leder beziehungsweise Pelzfelle einzubringenden Wertstoffgemisches auf Basis der Ester (I) vorzusehen.

Der Eintrag der Ester (I) - beziehungsweise deren Kombinationen mit den Verbindungen (II) und/oder (III) - über ihre wäßrige Angebotsform beziehungsweise ihrer Abmischungen mit den genannten weiteren Komponenten erfolgt in an sich bekannter Weise - siehe hierzu insbesondere auch die Angaben der eingangs genannten Druckschriften. Nur kurz sei daher zusammenfassend dargestellt:

Die Ester (I) - beziehungsweise deren Kombinationen mit den Verbindungen (II) und/oder (III) - eigenen sich zur Behandlung von allen üblichen gegerbten Häuten, insbesondere entsprechendem Material, das mit Mineralgerbstoffen gegerbt worden ist. Die gegerbten Häute werden üblicherweise vor der Behandlung entsäuert. Sie können bereits vor der Behandlung gefärbt worden sein. Eine Färbung kann aber auch erst nach der erfindungsgemäß durchgeführten Behandlung vorgenommen werden.

Das zur imprägnierende Leder wird üblicherweise mit den Estern (I)-beziehungsweise deren Kombinationen mit den Verbindungen (II) und/oder (III) - in wäßriger Flotte zweckmäßig bei pH-Werten von etwa 4 bis 10 und vorzugsweise bei pH 5 bis 8 und bei Temperaturen von etwa 20 bis 60°C, vorzugsweise 30 bis 50°C, während eines Zeitraumes bis zu einigen Stunden gegebenenfalls mehrstufig behandelt. Die Behandlung erfolgt beispielsweise durch Walken in einem Faß. Die Menge an den Estern (I) - beziehungsweise die Gesamtmenge der Verbindungen (I) bis (III) - in Form ihrer wäßrigen Angebotsform beträgt üblicherweise 0,1 bis 30 Gew.-%, insbesondere 1 bis 20 Gew.-% bezogen auf das Falzgewicht des Leders oder das Naßgewicht der Pelzfelle. Die Flottenlänge beträgt üblicherweise 10 bis 1.000 %, vorzugsweise 30 bis 150 %, bei Pelzfellen 50 bis 500 %.

Nach Abschluß der Behandlung mit der wäßrigen Flotte wird der pH-Wert der Behandlungsflotte durch Zusatz von Säuren in den leicht sauren Bereich verschoben. Geeignet ist insbesondere der Zusatz organischer Säuren, bevorzugt Ameisensäure. Bevorzugte pH-Werte liegen im Bereich von 3 bis 5, vorzugsweise im Bereich von etwa 3,5 bis 4.

Gewünschtenfalls kann eine Fixierung mit insbesondere Mineralgerbstoffen nachgeschaltet werden, wobei hier der Einsatz von Aluminiumsalzen, aber auch von anderen mehrwertigen Mineralsalzen, z.B. Chrom- oder Zirkonsalzen besonders bevorzugt sein kann. Wie bereits ausgeführt ist eine derartige Fixierung aber nicht zwingend erforderlich.

Ein weiterer Gegenstand der vorliegenden Erfindung ist daher ein Verfahren zur Hydrophobierung von Leder, Pelzen und dergleichen unter Verwendung der Ester (I), wobei man Leder bzw. Pelze in wäßriger Flotte mit Hydrophobierungsmitteln behandelt, die mindestens eine der Verbindungen (I) enthält, wobei man auf eine spätere Mineralsalzfixierung verzichtet.

**Beispiele**

**1. <u>Herstellung der Ester (I)</u>**

**<u>Beispiel 1</u>**

Die Herstellung des Esters (I) erfolgte zweistufig (wie oben dargestellt durch Veresterung nebst anschließender Sulfitierung):

<u>1. Stufe</u>

<u>Ansatzmengen</u>:

| | | |
|---|---|---|
| 446,4 g | Dimerdiol OH-Zahl = 201 (Sovermol POL 900$^{(R)}$, Henkel) | (= 0,80 mol) |
| 85,9 g | Maleinsäureanhydrid | (= 0,88 mol) |
| 3,2 g | p-Toluolsulfonsäure-Hydrat | |
| 0,5 g | Triphenylphosphit | |
| 100 ml | Toluol | |

Ausführung:

Die Substanzen wurden in einem 1 l-Dreihalskolben mit Rührer, Rückflußkühler mit Wasserabscheider und Stickstoffeinleitung aufgeschmolzen. Unter Überleiten von Stickstoff wurde bei Rückflußtemperatur (115 - 120 °C) gerührt. Das Reaktionswasser wurde azeotrop entfernt und am Wasserabscheider abgeschieden. Nach 5-stündiger Reaktion wurde das Toluol im Vakuum abdestilliert und das Produkt nach Belüften mit Stickstoff abgefüllt. Der erhaltene Ester wurde anschließend (in einem Ausmaß von ca. 95%) sulfitiert:

2. Stufe

Ansatzmengen:

| | |
|---|---|
| 120,0 g | des in der ersten Stufe erhaltenen Esters (= 0,168 mol Doppelbindungen) |
| 60,2 g | Diethylenglykoldimethylether (Diglyme) |
| 19,5 g | sulfitierter Ester (aus einem früheren Ansatz) |
| 15,2 g | Natriumbisulfit (= 0,16 mol Hydrogensulfit) |
| 30,0 g | vollentsalztes Wasser |

Ausführung:

In einem Dreihalskolben mit Rührer und Rückflußkühler wurden die drei erstgenannten Substanzen vorgelegt und auf 85 °C erwärmt. Bei dieser Temperatur wurde die Lösung des Natriumbisulfits in Wasser zugegeben. Es wurde 6 Stunden bei 95 °C gerührt. Der Ester konnte über eine Suspension in 2-Butanol oder Propylenglykolmonomethyletheracetat in Wasser gelöst werden (Feststoffgehalt: 60,5 Gew.-%).

**Beispiel 2**

Analog zu Beispiel 1, wobei jedoch bei der Veresterung 1,60 (statt 0,80 mol) Maleinsäureanhydrid eingesetzt wurden, entsprechend einem Äquivalent-Verhältnis COOH : OH von 2 : 1.

**2. Ausführungsbeispiele**

Waschechtheit, Reinigungsechtheit, Fogging-Echtheit und Wasserdichtigkeit von Ledern, die mit den Estern (I), z.B. den Estern gemäß den obigen Beispielen 1 und 2, behandelt worden waren, wurden generell als gut eingestuft.

Die Wasserdichtigkeit von Ledern, die mit den Estern (I) behandelt worden waren, wurde dabei - als Maß für die hydrophobierenden Eigenschaften der Ester (I) - mit einem Balley-Penetrometer gemäß Meßmethode IUP der Internationalen Union der Leder-Chemiker-Verbände (Kommission für physikalische Lederprüfung) untersucht. Die Methode ist publiziert in: **Das Leder, 1961, 12. Jahrgang, Seiten 36-40.** Als Kenngröße für die Güte der Hydrophobierung diente dabei die Wasserdurchtrittszeit. Die Stauchung der Leder betrug bei diesen Untersuchungen 15%.

Es stellte sich heraus, daß die erfindungsgemäß einzusetzenden Ester (I) gute bis sehr gute Werte in Bezug auf die Wasserdurchtrittszeiten aufwiesen. Dies ist umso bemerkenswerter, als die Stauchung der Leder bei den Penetrometertests auf 15% eingestellt wurde, was bedeutet, daß die Lederfasern unter diesen Prüfbedingungen sehr hohen Stauchungskräften ausgesetzt waren.

**Patentansprüche**

**1.** Verwendung Carboxylgruppen-terminierter Di-, Oligo- und/oder Polyester zur fettenden Ausrüstung von Leder, **dadurch gekennzeichnet, daß**

a) die Alkoholkomponente

a1) zu 50 bis 100 Gew.% aus Dimerdiol und/oder Trimertriol,
a2) zu 0 bis 50 Gew.% aus Alkandiolen mit 2 bis 18 C-Atomen und
a3) zu 0 bis 50 Gew.% aus Polyalkylenglykolen, und

b) die Säurekomponente

b1) zu 10 bis 100 Gew.% aus Sulfobernsteinsäure und
b2) zu 0 bis 90 Gew.% aus Sulfogruppen-freien Dicarbonsäuren mit 2 bis 24 C-Atomen

besteht, wobei die im Ester vorhandenen Sulfonsäure- und Carboxylgruppen in freier Form oder in Form ihrer Alkalimetall-, Erdalkalimetall-, Ammonium-, Alkylammonium- oder Alkanolammoniumsalze vorliegen können.

**2.** Verwendung nach Anspruch 1, wobei die Alkoholkomponente ausschließlich aus Dimerdiol und/oder Trimertriol besteht.

**3.** Verwendung nach Anspruch 1 oder 2, wobei man die Di-, Oligound/oder Polyester

a) durch Umsetzung der entsprechenden Säuren oder deren Syntheseäquivalenten mit den entsprechenden Alkoholen nebst anschließender Sulfitierung der dabei primär erhaltenen Ester oder - sofern die Säurekomponente frei ist vom fakultativen Bestandteil b2) -

b) durch Umsetzung niedermolekularer Ester der Sulfobernsteinsäure mit den entsprechenden Alkoholen

herstellt.

**4.** Verwendung nach Anspruch 3, wobei man die Mengenverhältnisse der jeweils eingesetzten Säure-Bausteine (beziehungsweise deren Syntheseäquivalente) und der Alkoholbausteine derart einstellt, daß das Äquivalent-Verhältnis COOH:OH im Bereich von 1,05 : 1 bis 2 : 1 liegt.

**5.** Verwendung nach einem der Ansprüche 1 bis 4, wobei die Di-, Oligo- und/oder Polyester charakterisiert sind durch die allgemeine Struktur (Ia),

$$\text{(t-Sulf)-(Diol)-[(i-Sulf)-(Diol)]}_x\text{-(t-Sulf)} \qquad \text{(Ia)}$$

worin

- t-Sulf eine $[M^1O_2C\text{-}CH_2\text{-}CH(SO_3M^2)\text{-}CO_2\text{-}]$-Gruppe,
- i-Sulf eine $[\text{-}O_2C\text{-}CH_2\text{-}CH(SO_3M^3)\text{-}CO_2\text{-}]$-Gruppe,
  wobei die Reste $M^1$ bis $M^3$ unabhängig voneinander Wasserstoff, Alkalimetall, Erdalkalimetall, Ammonium, Alkylammonium oder Alkanolammonium bedeuten,
- Diol eine Dimerdiolgruppe und
- x null oder eine Zahl im Bereich von 1 bis 10

bedeuten.

**6.** Verwendung nach Anspruch 5, wobei x die Zahl 0 bedeutet.

**7.** Verwendung nach einem der Ansprüche 1 bis 6, wobei man die Di-, Oligo- und/oder Polyester in Kombination mit

i) mindestens einem Aminopropionsäurederivat der allgemeinen Formel (II)

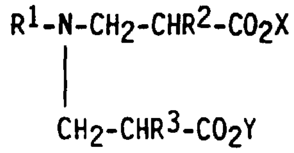

(II)

worin

- der Rest $R^1$ eine gesättigte, geradkettige oder verzweigte Alkylgruppe mit 8 bis 22 C-Atomen,
- die Reste $R^2$ und $R^3$ unabhängig voneinander Wasserstoff oder eine Methylgruppe und
- die Reste X und Y unabhängig voneinander Wasserstoff, Alkalimetall, Erdalkalimetall, Ammonium, Alkylammonium oder Alkanolammonium bedeuten

und /oder

ii) mindestens einem wasserdispergierbaren und/oder wasseremulgierbaren Co-Oligomeren (III) aus

a) Fettcrotonaten und

b) radikalisch copolymerisierbaren hydrophilen ethylenisch ungesättigen Säuren und/oder deren Anhydriden, die auch

c) untergeordnete Mengen weiterer copolymerisierbarer Comonomere enthalten können, einsetzt.

**8.** Verwendung nach einem der Ansprüche 1 bis 7, wobei man die Di-, Oligo- und/oder Polyester - beziehungsweise deren Kombination mit mindestens einer der Verbindungen (II) und/oder (III) - in wäßriger Angebotsform, d.h. in Form einer wäßrigen Lösung bzw. Dispersion, einsetzt.

**9.** Verwendung nach Anspruch 8, wobei man den pH-Wert der wäßrigen Angebotsform im Bereich von schwach sauer bis schwach alkalisch einstellt.

**10.** Verfahren zur Hydrophobierung von Leder, Pelzen und dergleichen, wobei man Leder bzw. Pelze in wäßriger Flotte mit Hydrophobierungsmitteln behandelt, die mindestens einen der in den Ansprüchen 1 bis 9 näher bezeichneten Carboxylgruppen-terminierten Di-, Oligo- und/oder Polyester enthält, **dadurch gekennzeichnet,** daß man auf eine spätere Mineralsalzfixierung verzichtet.

**11.** Mittel zur fettenden Ausrüstung von Ledern, Pelzen und dergleichen in Form einer wäßrigen Lösung oder Dispersion, wobei das Mittel Carboxylgruppen-terminierte Di-, Oligo- und/oder Polyester enthält, **dadurch gekennzeichnet,** daß

a) die <u>Alkoholkomponente</u>

a1) zu 50 bis 100 Gew.% aus Dimerdiol und/oder Trimertriol,
a2) zu 0 bis 50 Gew.% aus Alkandiolen mit 2 bis 18 C-Atomen und
a3) zu 0 bis 50 Gew.% aus Polyalkylenglykolen, und

b) die <u>Säurekomponente</u>

b1) zu 10 bis 100 Gew.% aus Sulfobernsteinsäure und
b2) zu 0 bis 90 Gew.% aus Sulfogruppen-freien Dicarbonsäuren mit 2 bis 24 C-Atomen

besteht, wobei die im Ester vorhandenen Sulfonsäure- und Carboxylgruppen in freier Form oder in Form ihrer Alkalimetall-, Erdalkalimetall-, Ammonium-, Alkylammonium- oder Alkanolammoniumsalze vorliegen können.

## Claims

**1.** The use of carboxyl-terminated di-, oligo- and/or polyesters for oiling leather, characterized in that

a) of the <u>alcohol component,</u>

a1) 50 to 100% by weight consists of dimerdiol and/or trimertriol,
a2) 0 to 50% by weight consists of alkanediols containing 2 to 18 carbon atoms and
a3) 0 to 50% by weight consists of polyalkylene glycols and

b) of the acid component,

b1) 10 to 100% by weight consists of sulfosuccinic acid and
b2) 0 to 90% by weight consists of $C_{2-24}$ dicarboxylic acids with no sulfo groups,

the sulfonic acid and carboxyl groups in the ester being present in free form or in the form of their alkali metal, alkaline earth metal, ammonium, alkylammonium or alkanolammonium salts.

**2.** The use claimed in claim 1, characterized in that the alcohol component consists solely of dimerdiol and/or trimertriol.

**3.** The use claimed in claim 1 or 2, characterized in that the di-, oligo-and/or polyesters are obtained

a) by reaction of the corresponding acids or their synthesis equivalents with the corresponding alcohols and subsequent sulfitation of the esters obtained
or - where the acid component is free from the optional constituent b2) -

b) by reaction of low molecular weight esters of sulfosuccinic acid with the corresponding alcohols.

**4.** The use claimed in claim 3, characterized in that the quantity ratios between the acid building blocks used (or their synthesis equivalents) and the alcohol building blocks are adjusted so that the equivalent ratio of COOH to OH is in the range from 1.05:1 to 2:1.

**5.** The use claimed in any of claims 1 to 4, characterized in that the di-, oligo- and/or polyesters are characterized by the general structure (Ia):

$$(t\text{-Sulf})\text{-}(Diol)\text{-}[(i\text{-Sulf})\text{-}(Diol)]_x\text{-}(t\text{-Sulf}) \quad (Ia)$$

in which

- t-Sulf is an $[M^1O_2C\text{-}CH_2\text{-}CH(SO_3M^2)\text{-}CO_2\text{-}]$ group
- i-Sulf is an $[\text{-}O_2C\text{-}CH_2\text{-}CH(SO_3M^3)\text{-}CO_2\text{-}]$ group
  where $M^1$ to $M^3$ independently of one another represent hydrogen, alkali metal, alkaline earth metal, ammonium, alkylammonium or alkanolammonium,
- Diol is a dimerdiol group and
- x is zero or a number of 1 to 10.

**6.** The use claimed in claim 5, characterized in that x = 0.

**7.** The use claimed in any of claims 1 to 6, characterized in that the di-, oligo- and/or polyesters are used in combination with

i) at least one aminopropionic acid derivative corresponding to general formula (II):

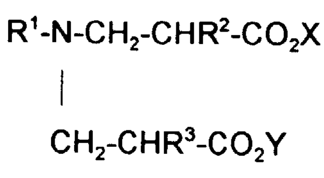

(II)

in which

- $R^1$ is a saturated, linear or branched alkyl group containing 8 to 22 carbon atoms,
- $R^2$ and $R^3$ independently of one another represent hydrogen or a methyl group and
- X and Y independently of one another represent hydrogen, alkali metal, alkaline earth metal, ammonium,

alkylammonium or alkanolammonium

and/or

ii) at least one water-dispersible and/or water-emulsifiable co-oligomer (III) of

a) fatty crotonates and
b) radical-copolymerizable hydrophilic ethylenically unsaturated acids and/or anhydrides which may also contain
c) small quantities of other copolymerizable comonomers.

**8.** The use claimed in any of claims 1 to 7, characterized in that the di-, oligo- and/or polyesters - or a combination thereof with at least one of the compounds (II) and/or (III) - are used in the form of an aqueous preparation, i.e. in the form of an aqueous solution or dispersion.

**9.** The use claimed in claim 8, characterized in that the pH of the aqueous preparation is adjusted to a value in the mildly acidic to mildly alkaline range.

**10.** A process for hydrophobicizing leather, pelts and the like in which leather or pelts is/are treated in an aqueous liquor with hydrophobicizing agents which contain at least one of the carboxyl-terminated di-, oligo- and/or polyesters claimed in claims 1 to 9, characterized in that there is no subsequent fixing with mineral salts.

**11.** A formulation for the oiling of leathers, pelts and the like in the form of an aqueous solution or dispersion, the formulation containing carboxyl-terminated di-, oligo- and/or polyesters, characterized in that

a) of the alcohol component,

a1) 50 to 100% by weight consists of dimerdiol and/or trimertriol,
a2) 0 to 50% by weight consists of alkanediols containing 2 to 18 carbon atoms and
a3) 0 to 50% by weight consists of polyalkylene glycols and

b) of the acid component,

b1) 10 to 100% by weight consists of sulfosuccinic acid and
b2) 0 to 90% by weight consists of $C_{2-24}$ dicarboxylic acids with no sulfo groups,

the sulfonic acid and carboxyl groups in the ester being present in free form or in the form of their alkali metal, alkaline earth metal, ammonium, alkylammonium or alkanolammonium salts.

## Revendications

**1.** Utilisation de diesters, d'oligo-esters et/ou de polyesters à extrémités porteuses de groupes carboxyle, pour la mise en huile et/ou la protection des cuirs, **caractérisée en ce que**

a) le composant alcool se compose de:

a1) 50 à 100 % en poids de diol dimère et/ou trimère
a2) 0 à 50 % en poids d'alcanediols comportant 2 à 18 atomes de C et de
a3) 0 à 50 % en poids de polyalkylèneglycols, et

b) le composant acide est constitué de:

b1) 10 à 100 % en poids d'acide sulfosuccinique et
b2) 0 à 90 % en poids d'acides dicarboxyliques dénués de groupes dérivés du soufre, comportant 2 à 24 atomes de C,

les groupes d'acide sulfonique et les groupes carboxyle présents dans l'ester pouvant l'être sous forme libre

ou sous la forme de leurs sels de métaux alcalins, de métaux alcalino-terreux, d'ammonium, d'alkylammonium ou d'alcanolammonium.

**2.** Utilisation selon la revendication 1, caractérisée en ce que le composant alcool est exclusivement constitué de diol dimère et/ou trimère.

**3.** Utilisation selon la revendication 1 ou 2, caractérisée en ce que l'on produit le diester, l'oligo-ester et/ou le polyester

a) par mise en réaction des acides correspondants ou de leurs équivalents de synthèse avec les alcools correspondants, puis sulfitage des esters obtenus ainsi dans un premier temps
ou - dans la mesure où le composant acide est exempt du constituant facultatif b2) -

b) par mise en réaction d'esters de faible poids moléculaire de l'acide sulfosuccinique avec les alcools correspondants.

**4.** Utilisation selon la revendication 3, dans laquelle les rapports des quantités du composant acide (ou de son équivalent de synthèse) mis en oeuvre dans chaque cas et du composant alcool est ajusté de manière telle que le rapport des équivalents COOH:OH se situe dans l'intervalle de 1,05:1 à 2:1.

**5.** Utilisation selon une des revendications 1 à 4, dans laquelle les diesters, les oligo-esters et/ou les polyesters sont caractérisés par la structure générale (Ia),

$$\text{(t-sulf)-(diol)-[(i-sulf)-(diol)]}_x\text{-(t-sulf)} \qquad \text{(Ia)}$$

dans laquelle

- t-sulf représente un groupe $[M^1O_2C\text{-}CH_2\text{-}CH(SO_3M^2)\text{-}CO_2\text{-}]$,
- i-sulf correspond à un groupe $[\text{-}O_2C\text{-}CH_2\text{-}CH(SO_3M^3)\text{-}CO_2\text{-}]$,
  les radicaux $M^1$ et $M^2$ représentant indépendamment l'un de l'autre l'hydrogène, un métal alcalin, un métal alcalino-terreux, un ammonium, un alkylammonium ou un alcanolammonium,
- diol est un groupe diol dimère,
- x est égal à zéro ou à un nombre dans l'intervalle de 1 à 10.

**6.** Utilisation selon la revendication 5, dans laquelle x représente le nombre 0.

**7.** Utilisation selon une des revendications 1 à 6, dans laquelle le diester, l'oligo-ester et/ou le polyester est mis en oeuvre en association avec

i) au moins un dérivé d'acide aminopropionique de la formule générale (II)

$$R^1\text{-N-}CH_2\text{-}CHR^2\text{-}CO_2X \qquad \text{(II)}$$

$$CH_2\text{-}CHR^3\text{-}CO_2Y$$

dans laquelle

- le radical $R^1$ représente un groupe alkyle saturé, à chaîne droite ou ramifiée, comportant 8 à 22 atomes de C;

- les radicaux $R^2$ et $R^3$ correspondent indépendamment l'un de l'autre à l'hydrogène ou à un groupe méthyle et

- les radicaux X et Y représentent indépendamment l'un de l'autre l'hydrogène, un métal alcalin, un métal alcalino-terreux, un ammonium, un alkylammonium ou un alcanolammonium

et/ou

ii) au moins un co-oligomère dispersible et/ou émulsionnable dans l'eau (III) constitué de

a) des crotonates gras et
b) des acides à insaturation éthylénique, hydrophiles, copolymérisables par voie radicalaire et/ou leurs anhydrides, qui peuvent également contenir
c) des quantités secondaires d'autres comonomères copolymérisables.

**8.** Utilisation selon une des revendications 1 à 7, dans laquelle on met en oeuvre le diester, l'oligo-ester et/ou le polyester - ou leur association avec au moins un des composés (II) et/ou (III) - sous une présentation aqueuse, c'est-à-dire sous la forme d'une solution ou d'une dispersion aqueuse.

**9.** Utilisation selon la revendication 8, dans laquelle on ajuste le pH de la présentation aqueuse dans la plage s'étendant de faiblement acide à faiblement alcalin.

**10.** Procédé d'imperméabilisation des cuirs, des peaux et des matières similaires, dans lequel on traite les cuirs ou les peaux dans un bain aqueux par des imperméabilisants, qui renferment au moins un des diesters, des oligo-esters et/ou des polyesters à extrémités porteuses de groupes carboxyle, définis plus précisément aux revendications 1 à 9, **caractérisé en ce que** l'on renonce à une fixation ultérieure mettant en oeuvre des sels minéraux.

**11.** Agent pour la mise en huile et/ou la protection des cuirs, des peaux et des matières similaires, sous la forme d'une solution ou d'une dispersion aqueuse de diesters, d'oligo-esters et/ou de polyesters à extrémités porteuses de groupes carboxyle, **caractérisé en ce que**

a) le composant alcool se compose de:

a1) 50 à 100 % en poids de diol dimère et/ou trimère
a2) 0 à 50 % en poids d'alcanediols comportant 2 à 18 atomes de C et de
a3) 0 à 50 % en poids de polyalkylèneglycols, et

b) le composant acide est constitué de:

b1) 10 à 100 % en poids d'acide sulfosuccinique et
b2) 0 à 90 % en poids d'acides dicarboxyliques dénués de groupes dérivés du soufre, comportant 2 à 24 atomes de C,

les groupes d'acide sulfonique et les groupes carboxyle présents dans l'ester pouvant l'être sous forme libre ou sous la forme de leurs sels de métaux alcalins, de métaux alcalino-terreux, d'ammonium, d'alkylammonium ou d'alcanolammonium.